# EUROPEAN PATENT APPLICATION

(11) **EP 3 822 243 A2**
(43) Date of publication of application: **19.05.2021**
(21) Application number: 20000402.6
(22) Date of filing: 05.11.2020
(51) Int. Cl.: C05F 17/10, C05F 17/20, C05F 17/70, C05G 3/80, C05G 5/30, C05G 5/40

(54) **PROCESS FOR THE PRODUCTION OF A SOIL AND PLANT NUTRIENT MATRIX BASED ON ORGANIC MATTER HAVING A HIGH SWELLING CAPACITY**

(30) Priority: 18.11.2019 HU 1900388
(71) Applicant: Tamás, János, 4029 Debrecen (HU); Bárány, László, 4030 Debrecen (HU)
(72) Inventor: Tamás, János, 4029 Debrecen (HU); Bárány, László, 4030 Debrecen (HU)

(57) **Abstract**

The patent application relates to a process for the production of a soil and plant nutrient substance matrix based on organic matter having a high swelling capacity, which substance matrix is a nutrient replenishing, soil and plant conditioning fertilizer preparation based on readily biodegradable organic matter, produced in pellet or granular form, which, in addition to the organic matter providing the nutrients needed by soils and plants, also contains water-absorbing substances (hydrogels), which are formed from their components during the process and which, after the application of the substance matrix to the target area, are capable of absorbing large quantities of water, storing it for a longer period of time, and then gradually releasing it, thereby making constantly available the water, the microbial community necessary for the development of the plants, and for the proper dissolution of the nutrient components and soil conditioning substances from the complex of organic substances.

## Description

The patent application relates to a process for the production of a soil and plant nutrient substance matrix based on organic matter having a high swelling capacity, which substance matrix is a nutrient replenishing, soil and plant conditioning fertilizer preparation based on readily biodegradable organic matter, produced in pellet or granular form, which, in addition to the organic matter providing the nutrients needed by soils and plants, also contains water-absorbing substances (hydrogels), which are formed from their components during the process and which, after the application of the substance matrix to the target area, are capable of absorbing large quantities of water, storing it for a longer period of time, and then gradually releasing it, thereby making constantly available the water, the microbial community necessary for the development of the plants, and for the proper dissolution of the nutrient components and soil conditioning substances from the complex of organic substances.

Preparations containing both inorganic and organic matters are used to improve the nutrient content, inorganic and organic matter content, and structure of the soil, according to the area of application. Natural organic matter is biodegradable, however, due to its lower water solubility, it does not leach out of the soil, so it remains there for a long time, and thus continuously provides the nutrients needed by plants.

In the production of organic fertilizer, matter of animal and vegetable origin can be processed by aerobic decomposition, as disclosed in U.S. Patent No. 9,994,493. In the process, liquid and solid organic fertilizer is produced from animal manure, preferably poultry manure, by aerobic decomposition. Liquid fertilizer can be useful as a fertilizer spray, while solid fertilizer can be spread onto fields in a pelletized or granulated form.

Hungarian patent application No. P0303407 relates to a process in which organic fertilizer of animal origin is granulated in such a way that, for proper formability, the moisture content of the organic fertilizer is adjusted chemically instead of drying, as a physical process, by the hydration reaction of calcium sulfate, an inorganic salt capable of absorbing water. The organic fertilizer produced in this way does not require physical drying. The substance used for absorbing moisture can also be produced in situ during the process. The result of the process is composite fertilizer having a moisture-retaining effect, which, due to its porous structure, can be saturated with water before use, and the absorbed water can be utilized.

A known solution is to use various additives, e.g. minerals in granulated organic and chemical fertilizers, according to the area of application, the needs of the soil and plant used. On dry areas, the water required for the dissolution of natural water-soluble components from the chemical fertilizer used for supplying the soil and plants with nutrients can be provided by irrigation, or the organic fertilizer can be supplemented with water-absorbing additives, hydrogels, which, due to their water absorbing capacity, continuously release the absorbed water on the area of application.

Patent application with publication number WO 2010/045687 A1 discloses a process for producing a storage stable fertilizer composition in the form of granules or pellets, used primarily for treating turf. The invention is based on the recognition that to establish new turf it is usually necessary to apply fertilizer and also to water regularly. Due to variations in climate and soil structure, the exact amount of water that must be applied to establish or maintain turf will vary. If the consumer applies too little water, the turf may fail, however, excessive watering will lead to waste, and the leaching out of nutrients from the soil before they could be used. Due to all these, the type of fertilizer used and the manner of irrigation will affect the rate of turf growth, the structure of the soil and the root structure of the turf as it grows. To decrease the amount of water required, water absorbent polymers, otherwise known as hydrogels, are mixed to the organic fertilizer in the fertilizer composition, which are capable of absorbing and retaining water for the roots of turf to use. When these hydrogels are present in soil, it is not necessary to water as frequently. The process consists of three stages, in the first stage an organic fertilizer of plant or animal origin is mixed with a hydrogel; in the second stage the mixture is pelletized or granulated; then the pellets or granules are dried. The process uses hydrogels comprising ionic groups, such as carboxylates, ammonium salts or metal ions; synthetic polymers.
The size of the polymer can affect the amount of water that can be absorbed and the rate of water absorption. Accordingly, the size of the polymer can be chosen depending on the amount of rainfall, irrigation, soil structure and climate.

A disadvantage of the above solutions is that soil conditioning is ignored, the used hydrogels are typically made from non-natural raw materials, and the solutions disclosed do not address the microbial surface treatment of the pelletized material.
Furthermore, the commercially available organic fertilizer-based pellets or granules have a low water absorption capacity, usually up to 2-4 times their weight.

The aim of the invention is to eliminate the above deficiencies, and to produce a heat-treated soil and plant nutrient substance matrix based on organic matter of natural origin, which substance matrix is capable of absorbing large amounts of water and releasing it in a controlled manner. Another aim is to guarantee a minimum water absorption capacity of twenty times the initial weight of the substance produced by the process. Yet another aim is to improve the water absorption, water solubility and water release of substances and organisms embedded in the substance matrix and present in the soil environment. The general purpose of using a substance matrix, which shall be suitable for precision application, is to combine in a new way the goals of water management - nutrient management - soil protection, which have been treated separately so far, and thus to radically improve the biological activity of the soil and plants, and to reduce the risk of plant stress, erosion and climate change.
As loose soils are highly exposed to the effects of soil destruction by water erosion and wind deflation, a further aim is to provide a complex of substances that can reduce rainfall-runoff values by 5-15% through a higher available water content and the controlled release thereof, and to radically reduce erosion damage through biomass providing greater soil coverage. This secondarily reduces the load of nutrients and herbicides on the water resources, and improves their agricultural efficiency.

The idea of the invention is based on the recognition that a critical point of the solutions used so far for the replenishment of organic matter in agriculture is the lack of sufficient available water needed for biological processes. On loose soils, therefore, organic matter is oxidized in a short time without having an effect. The application of organic fertilizer or other organic matter alone under long-term water-deficit conditions to loose soils with high air content, where the soil plasticity index according to Arany (a soil physical parameter indicating the plasticity of soil) is below 25, causes crop loss when compared to our control measurements. In practice, this is the consequence of the heat effect of the oxidation processes of the organic matter of the fertilizer, which will become more frequent in the future with the frequency of the extreme effects of climate change. Therefore, a complex of substances shall be created, which allows, as a combined effect of the hydrogels and organic matter in it, the controlled release of both chelated essential microelements and herbicides, thus the product would also have a significant potential for further development in the field of environmentally friendly and precision agriculture applications.

The process according to the invention for the production of a soil and plant nutrient substance matrix based on organic matter having a high swelling capacity consists of three stages, which are as follows:
- The first stage consists of the aerobic decomposition, heat treatment and chopping of the raw materials. The end product of the first stage is a ferment.
- The second stage comprises the addition of additives, the treatment of the end product of the first stage, the ferment with additives. The end product of the second stage is a mixture.
- In the third stage, the mixture formed in the second stage is pelletized. The end product of the third stage, which is also the end product of the process, is a substance matrix.

In the first stage, the raw materials are subjected to fermentation, that is aerobic decomposition. The raw materials consist exclusively of natural organic matter of animal and plant origin. The organic matter of animal origin is manure with bedding, e.g. pig, cattle, poultry manure, and the organic matter of plant origin can be e.g. straw, husk residue, or cane. The water content of manure with bedding before processing does not exceed 60% of the total weight, and the C/N ratio of the dry matter is less than 40. The manure with bedding can be mixed with chopped straw of fractions below 0.3 mm, which ensures the efficiency of biological transformation occurring in the aerobic processes during production. The raw materials of the production process shall not contain any substance harmful to the environment and human health in an amount exceeding the limit values applicable in the country of application.

The aerobic processing of the raw materials in the first stage can take place by slow or fast fermentation.
In the case of slow fermentation, the mass flow controlled mixing and homogenization of the raw materials from various animal husbandry technologies is performed in a fermenter, preferably a HOSOYA fermentation system. The mixing ratios are checked by on-site rapid testing, to ensure the C/N ratio and microbial activity. If necessary, the C/N ratio can be changed, e.g. by adding more organic matter, if required by the C/N ratio. During slow, regulated and controlled fermentation, in addition to complete mixing in less than 4 hours in a fermenter with a moving impeller, heat and water management in the reactor chamber is also controlled by air supply. The average duration of slow biofermentation is 10-14 days. To start the fermentation, an inoculum of natural origin, e.g. free-range poultry manure with bedding is used, amounting to up to 10% of the total weight of the manure with bedding.
The fermentation chambers are continuously in operation, during the fermentation process the input material moves along a 360-degree trajectory and is in intermittent unidirectional motion. Upon reaching the unloading point, the fermented material is transferred to the next phase of the first stage.
In the case of fast fermentation, i.e. lasting for less than 5 days, fast aerobic decomposition is performed with active aeration of the raw materials, in an open vessel, with mechanical stirring. During this type of processing, in the 3-5-day period, complete mixing is performed at least twice.

During both slow and fast fermentation, moisture content decreases from 40-45% to 20-28%, and the C/N ratio to less than 20 by the end of the process.
The gases emitted during aerobic decomposition are recovered by scrubbers, and the dust, which can be recycled into the aerobic material flow, by dust cyclones. The greenhouse gas emissions of the production technology can thus be minimized, the environmental load remains below the limit values.
This is followed by intensive drying of the material obtained by slow or fast fermentation, during which the moisture content is reduced from 22-28% to 10-11%. This fast drying is achieved by air of a temperature of 125-130 °C. The exposure time is 30-35 minutes. Prolonged exposure to heat above 125 °C kills all pathogenic bacteria. The heat is produced using renewable energy. The dried and sterile material is then ground to powder fraction, and this ground sterile material, the ferment, is the end product of the first stage of production.

In the second stage of production, additional substances are added to the heat-treated, crumbled/ground organic matter produced in the first stage, the ferment, that is, it is supplemented with complex organic and inorganic substances that significantly affect the management of nutrients and water in soils. In the second stage a mixture is produced.
The additional substances are, on the one hand, additives and, on the other hand, hydrogels or hydrogel-forming substances required for forming a hydrogel system. The amount of additional substances shall not exceed 50% of the dry weight of the final product.

The additives shall be selected - as necessary for the given soil type - from the following groups:
- Minerals of natural origin or processed derivatives thereof for the purpose of controlling the release of water and nutrients. Based on our tests, the substances that can be used are primarily ground clay minerals, e.g. bentonite, vermiculite, montmorillonite, zeolite of fractions below 2 mm, and perlite.
- Natural adhesives to ensure the physical stability of the product, to reduce dusting, e.g. vinasse, natural glue (casein glue, gluten glue), special waxes, glycerine, latex, gypsum.
- Macro- (N, P, K) / meso- and microelements (Ca, Mg, Zn, Cu, B) to ensure nutrient balance and critical water retention capacity.

For forming the hydrogel system:
either commercially available hydrogels are added,
or hydrogel-forming substances selected from the following groups are added:
   - Biopolymers to form the hydrogel structure, and to ensure biodegradability, e.g. starch, hydrolysed starch (modified starches), acetylated distarch phosphate E 1414, cellulose, pectin, carrageenan E407, alginate E400, chitosan, collagen, gelatine, agarose (agar agar).
   - Monomers (acrylic acid or acrylamide) to increase the swelling parameters, and other types of cross-linkers: to form a cross-linked structure e.g. bis-acrylates, polyvalent carboxylic acids, aldehydes.
   - Initiators to initiate the cross-linking process.

The amount of additives actually used is determined by the type of the soil and - the needs of the crop grown. The size of the additives should typically be less than 2 mm, to ensure adequate homogeneity, and to avoid subsequent crumbling, breakage of the mixture, and the application of the final product produced in this form to the soil greatly improves the nutrient consumption of plants compared to the application of other organic matters containing the same active substances. Based on germination and small plot-experiments, the application of the product already from this phase to the physical soil types sandy loam and loam having a medium macronutrient level showed an improvement of 5-15% in nutrient consumption compared to the untreated control soil.
In the case of maize, sunflower, beans, and cucumber, as indicator plants, the dose ranged between 0.5-2.0 T/ha, and the C/N ratio between 10-30.
In this process, based on our measurements, all additives can be used in 2-5%.

After the addition of the additives to the ferment, commercially available hydrogels or hydrogel-forming substances required for forming a hydrogel system, biopolymers, monomers and other cross-linking substances, and initiators are added.
Hydrogels are biodegradable super-absorbent materials that, when in contact with water in the dehydrated state, can absorb up to 50-100 times their weight in water. Based on our test results, values significantly exceeding this value have also been measured, as the tendency of certain cellulose derivatives to gel and retain water is significantly influenced by their molecular weight and the amount used. This property of hydrogels makes it possible to ensure the conditions necessary for the biodegradation of organic matter introduced into the soil by the final product granules, from which it is released in the soil environment, and optimal nutrient uptake. The pace of water management processes can also be controlled, and nutrient loss and plant water stress can be reduced by the ratio of additives, swellable clay minerals added to the mixture before the formation of the hydrogel system.

There are three ways to form a hydrogel system:
- Commercially available hydrogels are added to the ferment mixed with additives.
- In the in-tech process, biopolymers, monomers and cross-linking agents, as well as initiators initiating the cross-linking are added and thus the hydrogel system is formed during the production process.
The cross-linking can be performed by room temperature, thermal or photopolymerization.
- In the on-site process, only biopolymers and cross-linking agents are added during the production process, in this phase no initiator is added, so cross-linking is not performed in this phase. The initiator is applied by spraying only after the final product has been applied to the soil, so that a hydrogel system is formed immediately after application to the soil.

The amount of hydrogel is adjusted to the practical pellet dose rates of 0.5-1.5-2.0 T/ha.

Based on our tests, the swelling capacity of the preparation according to the invention depends on the type/ratio of the monomer/biopolymer used, and the density of cross-linking. The same parameters also affect the mechanical properties of the mixture. Hydrogels are soft materials, the xerogels formed after drying them are hard and brittle.

When the additives are added, the basic composition of the organic matter no longer changes, so based on tests, the amount of mineral additives added to the organic matter is: 1-10%. In the production technology, the ratio of additives is maintained by a fully automated mass mixer.

In the third stage of the process, the mixture is pelletized. The pelletizing technology does not use external water vapour, to avoid further water absorption. Pelletization is caused by two things: a very high pressure, preferably 80-90 MPa, and a temperature above 100 °C, preferably between 110-120 °C, when passing through the dies. Then the raw material is heated, most of the water in it changes into vapour state in a closed space, and a transformation process occurs, as a result of which the particles of high organic matter content stick together. The pellets of a temperature of 80-100 °C enter a pellet cooler, where due to an intense air flow, moisture escapes from the continuously cooling material in the form of vapour, while the material cools. Pelletization is followed by cooling, during which the product cools back to 20-25 °C. As a result of heating and recooling, it loses an additional 12-15% of its moisture content. The size of the pellets, depending on their use, will be in the fractions of 8-12 mm. The final finished product is packaged as pellets.

In the third stage of the process, during the cooling, another step is performed, ensuring the production of a unique target product. The surface of the pellets is coated with a liquid-based natural solution. The solution supplies trace element components, fragrance and aroma substances, as well as biostimulators, in cellular/spore form (a microbial suspension, e.g. cellulose decomposers) to the still warm granules, which thus diffuses into the deeper layers of the granules.

During the process, the previously added dehydrated hydrogel allows the application of microbial communities (mainly spores) that are important for soil life to the surface of the granules in the form of a solution spray. The moisture absorbed by the hydrogel compensates for the natural fluctuations in soil biological activity, so in addition to soil feeding, the substance matrix produced by the process according to the invention can also be used for soil improvement (phytostabilization of slopes), or recultivation of degraded landscapes (e.g. motorways, landfills) and erosion protection.

The product can be supplied in traditional packaging, in packages of 5-10-25-1000 kg according to customer requirements.
The packaging includes an additional novelty. A semi-permeable material can be used during packaging, in the form of small tea filter bags and also in form of strips. In this, seeds are packaged together with a target product produced by the process, which has been produced for the given soil type and genetic needs. Another form of packaging is when plant seeds are applied to the surface of the granules during coating.
Overall, this creates a micro-environment that provides the necessary conditions for the seeds in a changing environment.

The substance matrix produced by the process according to the invention, due to its water-absorbing capacity, already contributes significantly to water retention and the maintenance of certain soil properties, such as an increase in available water resources, improved soil hydraulic conductivity, porosity, heat and air management. The water potential of the substance matrix is at least 1.5, that is, it only releases gravitational water with a low matrix potential, but provides water for uptake by the plants.
The substance matrix is also suitable for an entirely new use. By redissolution, a stock solution can be prepared from it, which can be applied in liquid form to the surface of plants, where, based on preliminary tests, it can also have a biostimulatory and phytosanitary effect. The shelf life of the packaged finished product is 12 months. Naturally, the product produced by the process has undergone rigorous agrochemical experiments, on the basis of which expert advice on the conditions of use (recommended dose, date, method of application) is also available to the customer.

The substance matrix produced by the process according to the invention also has the following properties and effects:
- it is capable of releasing water in a retarded and controlled manner;
- it is suitable for introducing plant nutrients, humates and biostimulators into the soil;
- it is suitable for introducing microbial substances of natural origin in cellular/spore form into the soil;
- it is suitable for introducing plant stimulants of natural origin;
- it is suitable for significantly improving the biological activity of soils and roots, and for maintaining it for a long time;
- it is suitable for the biodegradation of contaminated soils, and for substance stabilization during the degradation.

The preferred embodiments of the process according to the invention will be described by way of the following examples, without being limited thereto.

### Example 1

The initial raw material is 1.6 kg of broiler manure, of which 10% by weight is free-range poultry manure, added to the broiler manure in advance as an inoculum. The water content of the raw material before processing is 50% of the total weight, and the C/N ratio of the dry matter is 30-35.
The initial raw material is subjected to slow aerobic decomposition in a HOSOYA fermentation system. During the 14 days of fermentation, in addition to complete mixing in less then 4 hours in a fermenter with a moving impeller, heat and water management in the reactor chamber is also controlled by air supply.
After fermentation, the weight of the raw material drops to 1 kg due to oxidation and water loss. The C/N ratio is less than 20 at the end of the process, as measured on the input/output side during production.
This is followed by the intensive drying of the material obtained by fermentation, during which the moisture content is reduced from 22-28% to 10-11%. This fast drying is achieved by air of a temperature of 125-130 °C. The exposure time is 30-35 minutes, and the output weight is 0.9 kg, which is ground to fractions of 2-4 mm. The sterile ferment obtained by grinding after drying is mixed with 1-2% by weight of commercially available hydrogel and 1-10% by weight of bentonite clay mineral, and then the mixture is pelletized. Pelletization is followed by cooling, during which the product cools back to 20-25 °C, and as a result of heating and recooling, it loses an additional 12-15% of its moisture content. This is partially offset by the fact that at 30-40 °C the final product is coated with a 2-3% by weight microbial suspension, applied using a nozzle while stirring, which is absorbed during cooling.

There are several alternative ways to form a hydrogel system, so the following examples (1A, 1B, 1C) differ in this respect from the example described above. In the "in-tech" production solution, a hydrated system is formed, particles of controlled size are produced from biopolymers after cross-linking by room temperature, high temperature, or photopolymerization (using a catalyst/initiator) during the process according to the invention.

### Example 1A: Thermal polymerization

The quantity, quality, fermentation, drying of, the additives added to, and the pelletization of the initial raw material are the same as described in Example 1, the difference is that in this example no ready-made, commercially available hydrogel is added to the ferment, but components required for forming a hydrogel system, and cross-linking is performed in the second stage, before pelletization. 9% (+/- 5%) acrylic acid as a synthetic monomer, 38% (+/- 9%) N,N-methylene bis-acrylamide as a cross-linker, and 2% (+/- 1%) ammonium persulphate as an initiator are mixed together. All three substances are water-soluble. An aqueous solution of the monomers is added to the selected carboxymethyl cellulose as a biopolymer, amounting to 1% (+/- 0.5%), and a viscous aqueous solution is obtained. A mixture of the above monomers, cross-linker, initiator and biopolymer is added to the solid ferment, after dissolving it in water to form an aqueous solution in an amount that can be absorbed by the solid mixture described above, and the material becomes plastic and formable. Spherical shapes are formed to a diameter of 2-5 mm using a forming machine. Thermal polymerization takes places at 80 °C, in 20 minutes.

### - Example 1B: Room temperature polymerization

The process is similar to Example 1A, the biopolymer is carboxymethyl cellulose, the monomer is acrylic acid, the cross-linker is polyethylene glycol dimethacrylate, and the initiator is ammonium persulphate. In this way, the polymerization takes place at 20-30 ° C, in 20 minutes, in the presence of nitrogen gas.

### Example 1C: Photopolymerization

The process is similar to Example 1A, the biopolymer is carboxymethyl cellulose, the monomer is acrylamide, the cross-linker is polyethylene glycol dimethacrylate, and the initiator is 2,2-dimethoxy-2-phenyl-acetophenone, a photoinitiator. In this way, polymerization takes place in the presence of nitrogen gas, illuminated by a 400-nm light source, at 20-30 °C, in 20 minutes.

### Example 2

The fermentation and drying stage is the same as in Example 1, but the cross-linking process is performed on the field, after application ("on-site" technology). In this case, from the hydrogel-forming substances in Example 1A the biopolymer and the cross-linking agent (the monomer is acrylic acid, the cross-linker is polyethylene glycol dimethacrylate) are added, and in the ratios used therein, but the initiator (ammonium persulphate) is not, so cross-linking is not performed yet. The pellets do not contain the initiator, but contain the bentonite added before pelletization, and the microbial coating as in Example 1.

When the pellets are applied to the furrows at the depth of the root zone of the plants, a 2% (+/- 1%) solution of the initiator (ammonium persulphate) is sprayed on them from a solution tank to start the cross-linking of the biopolymers, which takes about 5-10 minutes depending on the temperature, then the furrows are closed using a compaction roller. The process provides environmental safety throughout the life cycle of the product.

## Claims

1. A process for the production of a soil and plant nutrient substance matrix based on organic matter having a high swelling capacity, in which process raw materials consisting of natural organic matter of animal and plant origin are fermented under aerobic conditions, then dried and chopped, and the obtained ferment is treated with additional substances, where the additional substances are, on the one hand, additives and, on the other hand, substances required for forming a hydrogel system, then the mixture is pelletized at a pressure of 80-90 MPa and at a temperature in the range of 110-120 °C, and cooled, and finally the pellets are packaged,
**characterized in that**
in the fermentation of the raw materials traditional free-range poultry manure is used as an inoculum,
after fermentation, drying is performed by air of a temperature of 125-130 °C for 30-35 minutes, and the obtained sterile material is ground,
biopolymers, monomers and other cross-linking substances, and initiators are used for forming a hydrogel system, and the biopolymers are cross-linked before pelletization,
the surface of the pellets is coated with a liquid-based natural solution.

2. The process according to claim 1, **characterized in that** the amount of the inoculum is 10% of the amount of the raw materials.

3. The process according to claim 1, **characterized in that** the C/N ratio of the raw materials is continuously monitored during the fermentation.

4. The process according to claim 1, **characterized in that** the fermentation of the raw materials is performed by slow fermentation for 10-14 days in a fermenter.

5. The process according to claim 1, **characterized in that** fermentation of the raw materials is performed by fast fermentation for 3-5 days in an open vessel.

6. The process according to claim 1, **characterized in that** the additives are selected from the following groups: minerals of natural origin or processed derivatives thereof, such as bentonite, vermiculite, montmorillonite, zeolite of fractions below 2 mm, and perlite; adhesives of natural origin, such as vinasse, natural glue, special waxes, glycerine, latex, gypsum; macro- (N, P, K) / meso- and microelements (Ca, Mg, Zn, Cu, B).

7. The process according to claim 6, **characterized in that** the amount of the additives is 2-5% of the amount of the ferment.

8. The process according to claim 1, **characterized in that** bis-acrylates, polyvalent carboxylic acids, or aldehydes are used as cross-linking substances.

9. The process according to claim 1, **characterized in that** the cross-linking of biopolymers is performed by thermal polymerization at 80°C, in 20 minutes, using ammonium persulphate as the initiator.

10. The process according to claim 1, **characterized in that** the cross-linking of biopolymers is performed by room temperature polymerization at 20-30°C, in 20 minutes, in the presence of nitrogen gas, using ammonium persulphate as the initiator.

11. The process according to claim 1, **characterized in that** the cross-linking of biopolymers is performed by photopolymerization, in the presence of nitrogen gas, illuminated by a 400-nm light source, at 20-30 °C, in 20 minutes, using 2,2-dimethoxy-2-phenyl-acetophenone, a photoinitiator as the initiator.

12. The process according to claim 1, **characterized in that** the surface of the pellets is coated with a microbial suspension in the temperature range of 30-40 °C during cooling after pelletization.

13. The process according to claim 12, **characterized in that** coating is applied using a nozzle while stirring.

14. The process according to claim 1, **characterized in that** the final product is packaged together with seeds in a semi-permeable material.
